# EUROPEAN PATENT SPECIFICATION

(11) **EP 3 321 349 B1**
(45) Date of publication and mention of the grant of the patent: **06.11.2019**
(21) Application number: 16823928.3
(22) Date of filing: 08.07.2016
(51) Int. Cl.: C12G 3/06, C12G 3/08, C12H 1/04, C12H 1/07

(54) **METHOD FOR PRODUCING AN ALCOHOLIC BEVERAGE BASED ON TEQUILA AND VODKA**
VERFAHREN ZUR HERSTELLUNG EINER ALKOHOLISCHEN GETRÄNKS AUF DER BASIS VON TEQUILA UND WODKA
PROCÉDÉ DE PRODUCTION DE BOISSON ALCOOLISÉE À BASE DE TÉQUILA ET DE VODKA

(30) Priority: 10.07.2015 ES 201531002
(43) Date of publication of application: 16.05.2018
(73) Proprietor: Balearic Affair, Sociedad Limitada, 41020 Sevilla (ES)
(72) Inventor: CHAPARRO FERNÁNDEZ, David, 41020 Sevilla (ES)
(74) Representative: Tribalyte Ideas
(86) International application number: PCT/ES2016/070519
(87) International publication number: WO 2017/009509

(56) References cited:
- CN-A- 101 045 895
- RU-A- 2003 115 010
- RU-C1- 2 166 538
- RU-C1- 2 169 185
- RU-C1- 2 169 185
- Lauren Sedgwick: "'Vodquila', a blend of tequila and vodka, to hit the market - Telegraph", , 21 August 2014 (2014-08-21), XP055539103, Retrieved from the Internet: URL:https://www.telegraph.co.uk/foodanddri nk/foodanddrinknews/11048250/Vodquila-a-bl end-of-tequila-and-vodka-to-hit-the-market .html [retrieved on 2019-01-08]
- DATABASE GNPD [Online] MINTEL; 25 October 2006 (2006-10-25), anonymous: "Lemon Flavored Vodka and Tequila Cocktail", XP055538840, retrieved from www.gnpd.com Database accession no. 603593
- CAROLINE MCGUIRE: 'Imagine the hangover from this! New spirit hybrid Vodquila sounds lethal but has already won a prestigious industry award' DAILYMAIL ONLINE, [Online] 18 August 2014, XP055344866 Retrieved from the Internet: <URL:http://www.dailymail.co.uk/femail/arti cle-2725957/New-spirit-heading-UK-market-ca lled-Vodquila-hybrid-vodka-tequila.html> [retrieved on 2015-08-25]
- DATABASE WPI Derwent Publications Ltd., London, GB; & PL 393 280 A1 (INST NAWOZOW SZTUCZNYCH) 18 June 2012
- DATABASE WPI Derwent Publications Ltd., London, GB; & CN 101 045 895 A (CHONGQING ZHONG AOMEINONG BIOT CHONGQING ZHONG AOMEINONG BIOTECHNOLOGY) 03 October 2007

## Description

### FIELD OF THE INVENTION

The present invention is comprised in the field of industrial processes for the production of beverages and the products obtained from the application of said processes. More specifically, the invention relates to a novel method for producing an alcoholic beverage based on tequila and vodka.

### BACKGROUND OF THE INVENTION

New flavors and aromas that may offer unique characteristics to the obtained products and that ideally last for a long time are constantly under development and sought after within the field of flavored alcoholic beverage preparation.

In the case of beer beverages, the advantages of the hop plant as an agent which imparts astringency, bitterness and a bactericidal property to the final product are widely known. Nevertheless, in the world of spirituous beverages no reference has been made to the use of this peculiar plant, and particularly its flowers, for making flavored alcoholic beverages having a peculiar herbal, citrus aroma and a slightly bitter flavor, without astringency.

A spirit made of a blend of tequila and vodka is already known under the name Vodquilla ('Vodquila', a blend of tequila and vodka, to hit the market - Telegraph - Lauren Sedgwick, 2014).

A cocktail comprising vodka, tequila and lime is also known (Lemon Flavored Vodka and Tequila Cocktail, GNPD database, 2006). RU2169185 discloses a method to aromatize vodka with hops. CN101045895 discloses a method to obtain a tequila like brandy with lemons.

The present invention is therefore considered an alternative technique for preparing beverages based on tequila and vodka, wherein hop is used as an aromatic agent to impart its beneficial properties, wherein the obtained aromatic phases are subjected to a treatment involving a drop in temperatures, and wherein all the volatile compounds responsible for the aroma of each phase are concentrated and retained.

### BRIEF DISCLOSURE OF THE INVENTION

An object of the present invention therefore relates to the production of a beverage based on tequila and vodka which is capable of preserving a characteristic aroma and bitterness when it is mixed with citrus oils such as grapefruit, lime or lemon.

Said object is preferably carried out by means of a method for producing an alcoholic beverage based on tequila and vodka, where said method comprises the following steps:
- purifying the primary alcohol compounds of vodka and tequila by removing the subcompounds of said compounds that are not desired in the final product;
- mixing the alcohol compounds of vodka and tequila purified according to the previous step with their corresponding aromatic components of hop and citruses, and macerating the obtained mixtures at room temperature;
- distilling the macerated mixtures of vodka and tequila obtained in the previous step;
- mixing the distillates of vodka and tequila with one another, thereby obtaining the final beverage product.

In a preferred embodiment of the invention, for purifying the compound of tequila, said tequila is made to go through a continuous cooling treatment until reaching a controlled product temperature of substantially -5°C. More preferably, after performing the continuous cooling treatment, the tequila is made to go through a step of filtration by means of cellulose plates.

In another preferred embodiment of the invention, for purifying the vodka, the method begins with a high-concentration alcohol that is subjected to one or more steps of dilution with demineralized water, until reaching a concentration of substantially 40% by volume, and wherein the obtained product is filtered by means of activated carbon and/or by means of cellulose plates.

In another preferred embodiment of the invention, while mixing each of the aromatic phases of hop and citruses with their respective previously purified alcohol phases, said phases are kept at a controlled temperature with a value equal to or less than 0°C. More preferably, each of said phases is poured into hermetically sealed vessels to which the aromatic compounds derived from the hop and citrus aromas are subsequently added.

In another preferred embodiment of the invention, the aromatic compound to be mixed with vodka is preferably hop flower and the aromatic compound to be mixed with tequila is selected from grapefruit, lemon and/or lime.

In another preferred embodiment of the invention, the method comprises extracting lupulin from the hop flower, where it is mixed with vodka used as a solvent, where substantially 3 kg of hop flower are used for 300 liters of vodka purified to 40%.

In another preferred embodiment of the invention, after mixing vodka with the hop at a temperature of -5°C, the resulting mixture is left to macerate for a time period of fifteen days at room temperature.

In another preferred embodiment of the invention, the mixing of tequila with citruses comprises mixing, in 500 liters of purified tequila, 5 kg of red grapefruit peel, 10 kg of lemon peel, and 5 kg of lime peel, wherein said mixture is left to macerate at room temperature for a time period of fifteen days.

In another preferred embodiment of the invention, the mixtures of alcohol and aromatic components are distilled with a working distillation pressure of 0.7 bar, and keeping the temperature of the alcohol vapors that will undergo condensation equal to or less than 105°C.

In another preferred embodiment of the invention, the step of distilling the vodka comprises a step of cooling with water at a temperature equal to or less than 10°C.

In another preferred embodiment of the invention, the distillation of the mixture of citruses and the alcohol phase of tequila comprises extracting the heads, heart and tails of said distillation.

In another preferred embodiment of the invention, the temperature of the distilled vapors is equal to or less than 105°C.

In another preferred embodiment of the invention, demineralized water continuously cooled at 5°C is added to the distillation products once they are mixed. More preferably, the temperature of the mixture is controlled such that it does not exceed 3°C.

Another object of the invention relates to an alcoholic beverage based on tequila and vodka which is obtained from a method according to any of the embodiments described herein.

As mentioned, the main advantage provided by the invention is that the beverage obtained as the final product has a highly integrated aromatic composition, with a very well-rounded flavor on the palate and extremely well-balanced acidity and bitterness, and it is fairly but not overly sweet.

### DESCRIPTION OF THE DRAWINGS

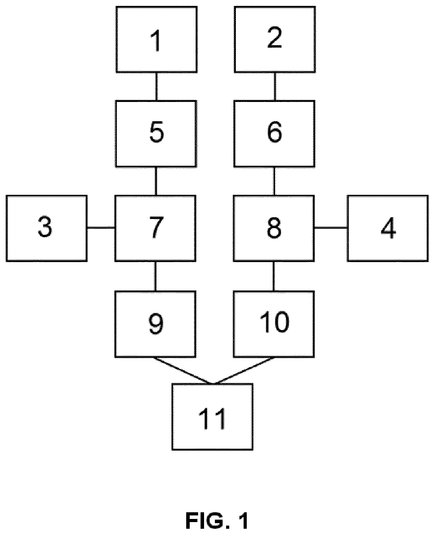

In order to help better understand the features of the invention, Figure 1 depicts a diagram of the manufacturing method described herein for a preferred embodiment of said invention.

### - Reference numbers of Figure 1:

(1) Vodka.
(2) Tequila.
(3) Hop flower.
(4) Citruses.
(5, 6) Purification of alcohol compounds (1, 2).
(7, 8) Mixing and maceration (7, 8) of alcohol compounds (1, 2) with their corresponding aromatic components (3, 4).
(9, 10) Distillation of the macerated mixtures (7, 8).
(11) Mixing of the distillations of vodka (1) and tequila (2).

### DETAILED DISCLOSURE OF THE INVENTION

A preferred embodiment of the invention based on the steps schematically depicted in Figure 1 herein is proposed below. Said preferred embodiment is provided for illustrative and non-limiting purposes with respect to other embodiments of the invention.

As described in the preceding paragraphs, the beverage herein considered is based on mixing alcoholic substances which form the basis of the beverage, i.e., tequila (2) and vodka (1), respectively, with the essential oil of the hop flower (3) (i.e., lupulin) and essential oils of citrus products (4) (for example, lime, lemon and/or grapefruit). To that end, the present invention considers a novel technology for macerating, distilling and filtering the aromatic phases at temperatures preferably equal to or less than -4°C, which assures that the essence and nature of the components are not destroyed, and thereby furthermore obtaining an alcoholic beverage in which the aromatic phases, sweetness, alcohol content and compounds responsible for the organoleptic stability and identity last for a sufficiently long time.

As described, the manufacturing process for manufacturing the beverage of the invention preferably comprises the following steps:
a) purifying (5, 6) the alcohol compounds, vodka (1) and tequila (2);
b) mixing and macerating (7, 8) the alcohol compounds (1, 2) with their corresponding aromatic components (3, 4);
c) distilling (9, 10) the macerated mixtures of vodka (1) and tequila (2);
d) mixing (11) the distillates of vodka (1) and tequila (2).

Each of the steps is described in detail below:

### a) Purifying (5, 6) the alcohol compounds, vodka (1) and tequila (2)

Purifying (5, 6) the alcohol compounds (vodka (1) and tequila (2)) refers to the removal of all the compounds that are not desired in the beverage product to be obtained, for example those compounds that may impart secondary aromas to the body of said beverage, derived from the base alcohol compounds thereof.

For purifying (6) the compound of tequila (2), said tequila (2) is made to go through a continuous cooling treatment preferably at a rate of 4000 liters per hour, until reaching a product temperature of -5°C, which causes an increased in the insolubility of the essential oils provided by the agave of the tequila (2). The tequila (2) is then made to go through a step of filtration by means of 1.2-micron cellulose plates, for example. The content of furfural and higher alcohols, compounds typical of tequila (2) which are not desired in the final beverage product, is thereby substantially reduced.

For purifying (5) vodka (1), although said product is considered one of the purest among spirituous beverages, a methodology for the complete removal of aromas, secondary alcohols, aldehydes and other undesired elements, will nevertheless be used.

High-concentration vodkas (1), typically of the order of 79%, must be filtered by means of activated carbon, for example, and subjected to a prior dilution typically for a time of 30 days. Preferably, the 79% vodka (1) is diluted to 50% with the addition of demineralized water, at which time an exothermic alcohol-water reaction takes place where the heat given off is utilized, and for each liter of product 6 grams of activated vegetable carbon are added to the mixture which is left to sit for a time period of fifteen additional days. After these fifteen days, the 50% vodka (1) is again preferably diluted to 40% (final content before being used for extracting the aromatic phase of the hop (3), and mixed with the final product). In this dilution with water, the previous exothermic reaction process is again repeated, and 4 grams of activated vegetable carbon are preferably added per liter of product.

The mixture with added carbon diluted to 40% is left to sit for fifteen more days, for subsequent filtering by means of using 1.2-micron cellulose plate filters, for example. The final result is an extra neutral water-alcohol mixture that is free of pulsating elements.

### b) Mixing and macerating (7, 8) the alcohol compounds (1, 2) with the aromatic components (3, 4)

In this step of the process, each main sub-product of the final beverage is prepared by means of mixing each of the aromatic phases (3, 4) with their respective previously purified alcohol phases (1, 2), and the rest of the compounds of the final beverage product. Preferably, mixing is performed at a controlled temperature equal to or less than 0°C to prevent the heat given off by the alcohol-water reaction from being able to cause the products responsible for the desired aroma and flavor to become volatile. To that end, the temperature of the purified tequila (2) and the purified vodka (1) is lowered to -3°C, for example, and they are both poured into respective hermetically sealed vessels, in which the aromatic compounds derived from hop (3) and citrus aromas (4) will be added. The aromatic compound to be mixed with vodka (1) is preferably hop flower (3), and the aromatic compounds to be mixed with tequila (2) are citruses (4) such as grapefruit, lemon and/or lime.

### b.1) Mixing and macerating (7) the aromatic compounds of the hop flower (3) with vodka (1)

This step comprises extracting lupulin from the hop flower (3), where it is mixed with vodka (1) used as a solvent, by means of an optimum weight ratio value of hop flowers (3) with respect to the amount of purified vodka (1) to be used as a solvent in the process. Said value is estimated at substantially 3 kg of hop flower (3) for 300 liters of vodka (1) purified to 40%.

The way of preparing the maceration (7) defines the essence of the final product. In this context, the previously purified vodka (1) must be cooled to a temperature of -5°C in continuous cooling equipment. It is then left to sit for a time period of fifteen days at room temperature of 25 degrees.

### b.2) Mixing and macerating (8) the aromatic compounds from citrus peels (4) with tequila (2)

5 kg of red grapefruit peel, 10 kg of lemon peel, and 5 kg of lime peel are added to 500 liters of purified tequila (2). This maceration (8) is preferably performed at room temperature of 25 degrees for a time period of fifteen days.

### c) Distilling (9, 10) the macerated mixtures of vodka (1) and tequila (2)

After macerating (7, 8) for fifteen days, the mixtures of hop flower (3) and vodka (1) are distilled by means of a conventional Moor's head alembic, for example, with a working distillation pressure of substantially 0.7 bar, and assuring that the temperature of the alcohol vapors that will undergo condensation does not exceed 105°C.

For this step of distillation (9), water at 6°C is used as a cooling element for condensation, which allows total condensation of the alcohol vapors of vodka (1) that are rich in lupulin (3). The condensate temperature can never exceed 10°C to prevent any aromatic compound provided by the hop flower (3) to the maceration from becoming volatile. The distillation ends with the production of preferably 200 liters of condensate. The rest of the alcohol residues from the tails and organic matter from the hop flower (3) are sent to a waste water treatment plant. The distillate that is rich in lupulin (3) is then stored in a vessel, for example, a stainless steel tank, until the time of performing the final mixing (11).

In turn, for extracting the aromatic phase of the mixture of tequila (2) and citruses (4), a maceration distillation (10) of all of peels of the citruses (4) and the alcohol phase (2) is preferably carried out in an alembic. In this distillation (10), the distillation heads, heart and tails are extracted to attain a citric aromatic phase that is very light and subtle without any hint of resins.

The temperature of the distilled vapors is preferably 105°C. The extracted head volume in the distillation (10) is 50 liters, whereas the hearts of the distillate are 300 liters and the tails 150 liters. The hearts of the distillate are preferably stored in stainless steel tanks, until they are used in the final mixing (11). The heads and tails are recovered as alcohol to be recycled.

### d) Mixing (11) the distillates (9, 10) of vodka (1) and tequila (2)

Once the two distillation products (9, 10) have been mixed (11), demineralized water preferably continuously cooled at 5°C is then added thereto. During this step of the method, the temperature in the mixture tank is controlled such that it does not exceed 3°C, thereby obtaining the final beverage product.

As described, the final result is a beverage product with a highly integrated aromatic composition, a well-rounded flavor on the palate which advantageously has a suitable balance of acidity and bitterness and is fairly but not overly sweet.

## Claims

1. A method for producing an alcoholic beverage based on tequila and vodka, **characterized in that** it comprises the following steps:
- purifying (5, 6) the primary alcohol compounds of vodka (1) and tequila (2) by removing the subcompounds of said compounds that are not desired in the final product;
- mixing (7, 8) the alcohol compounds of vodka (1) and tequila (2) purified according to the previous step with their corresponding aromatic components of hop (3) and citruses (4), and macerating the obtained mixtures at room temperature;
- distilling (9, 10) the macerated mixtures of vodka (1) and tequila (2) obtained in the previous step;
- mixing (11) the distillates of vodka (1) and tequila (2) with one another, thereby obtaining the final beverage product.

2. The method according to the preceding claim, wherein for purifying (6) the compound of tequila (2), said tequila (2) is made to go through a continuous cooling treatment until reaching a controlled product temperature equal to or less than -5°C.

3. The method according to the preceding claim, wherein after performing the continuous cooling treatment, the tequila (2) is made to go through a step of filtration by means of cellulose plates.

4. The method according to any of the preceding claims, wherein for purifying (5) vodka (1), the method begins with a high-concentration alcohol that is subjected to one or more steps of dilution with demineralized water until reaching a concentration of 40% by volume, and wherein the obtained product is filtered by means of activated carbon and/or by means of cellulose plates.

5. The method according to any of the preceding claims, wherein the mixing (7, 8) of each of the aromatic phases of hop (3) and citruses (4) with their respective previously purified alcohol phases (1, 2) comprises keeping said phases (1, 2) at a controlled temperature with a value equal to or less than 0°C, and wherein each of said phases is poured into hermetically sealed vessels to which the aromatic compounds derived from the hop (3) and citrus flavors (4) are subsequently added.

6. The method according to any of the preceding claims, wherein the aromatic compound to be mixed (7) with vodka (1) is the hop flower (3), and wherein the aromatic compound to be mixed (8) with tequila (2) is selected from grapefruit, lemon and/or lime.

7. The method according to any of the preceding claims which comprises extracting lupulin from the hop flower (3), where it is mixed (7) with vodka (1) used as a solvent, where 3 kg of hop flower (3) are used for 300 liters of vodka (1) purified to 40%.

8. The method according to any of claims 5 to 7, wherein after mixing (7) vodka (1) with the hop (3) at a temperature of -5°C, the resulting mixture is left to macerate for a time period of fifteen days at room temperature.

9. The method according to any of claims 5 to 8, wherein the mixing (8) of tequila (2) with citruses (4) comprises mixing, in 500 liters of purified tequila (2), 5 kg of red grapefruit peel, 10 kg of lemon peel, and 5 kg of lime peel, and wherein said mixture (8) is left to macerate at room temperature for a time period of fifteen days.

10. The method according to any of the preceding claims, wherein the mixtures of alcohol (1, 2) and aromatic components (3, 4) are distilled (9, 10) with a working distillation pressure of 0.7 bar and keeping the temperature of the alcohol vapors that will undergo condensation equal to or less than 105°C.

11. The method according to any of the preceding claims, wherein the step of distilling (9) the vodka (1) comprises a step of cooling with water at a temperature equal to or less than 10°C.

12. The method according to any of the preceding claims, wherein the distillation (10) of the mixture of citruses (4) and the alcohol phase of tequila (2) comprises extracting the heads, heart and tails of said distillation (10).

13. The method according to the preceding claim, wherein the temperature of the distilled vapors is equal to or less than 105°C.

14. The method according to any of the preceding claims, wherein demineralized water continuously cooled at 5°C is added to the distillation products (9, 10) once they are mixed (11), and wherein the temperature of the mixture is controlled such that it does not exceed 3°C.

15. An alcoholic beverage based on tequila and vodka, **characterized in that** it is obtained from a method according to any of the preceding claims.

## Patentansprüche

1. Verfahren zur Herstellung eines alkoholischen Getränks auf der Basis von Tequila und Wodka, **dadurch gekennzeichnet, dass** es die folgenden Schritte umfasst:
- das Reinigen (5, 6) der primären alkoholischen Verbindungen aus Wodka (1) und Tequila (2), indem die Teilverbindungen der genannten Verbindungen, welche im Endprodukt nicht erwünscht sind, entfernt werden;
- das Mischen (7, 8) der alkoholischen Verbindungen aus Wodka (1) und Tequila (2), gemäß dem vorhergehenden Schritt gereinigt, mit deren entsprechenden aromatischen Bestandteilen aus Hopfen (3) und Zitrusgewächsen (4), und das Einmaischen der erhaltenen Mischungen bei Raumtemperatur;
- das Destillieren (9, 10) der eingemaischten Mischungen aus Wodka (1) und Tequila (2), welche im vorhergehenden Schritt erhalten wurden;
- das miteinander Mischen (11) der Destillate aus Wodka (1) und Tequila (2), wodurch das endgültige Getränkeprodukt erhalten wird.

2. Verfahren nach dem vorhergehenden Anspruch, wobei zur Reinigung (6) der Verbindung aus Tequila (2), der genannte Tequila (2) durch eine kontinuierliche Kühlbehandlung hindurchgeführt wird, bis eine kontrollierte Produkttemperatur erreicht wird, die gleich oder kleiner als -5°C ist.

3. Verfahren nach dem vorhergehenden Anspruch, wobei nach der Durchführung der kontinuierlichen Kühlbehandlung, der Tequila (2) durch einen Filtrierungsschritt mittels Celluloseplatten hindurchgeführt wird.

4. Verfahren nach einem der vorhergehenden Ansprüche, wobei zur Reinigung (5) des Wodkas (1) das Verfahren mit einem hochkonzentrierten Alkohol beginnt, welcher einem oder mehreren Schritten des Verdünnens mit vollentsalztem Wasser unterzogen wird, bis eine Konzentration von 40 Vol.-% erreicht wird, und wobei das erhaltene Produkt mittels aktivierten Kohle und/oder mittels Celluloseplatten filtriert wird.

5. Verfahren nach einem der vorhergehenden Ansprüche, wobei das Mischen (7, 8) jeder der aromatischen Phasen aus Hopfen (3) und Zitrusgewächsen (4) mit deren jeweiligen zuvor gereinigten alkoholischen Phasen (1, 2) das Halten der genannten Phasen (1, 2) bei einer kontrollierten Temperatur mit einem Wert gleich oder kleiner als 0°C umfasst, und wobei jede der genannten Phasen in hermetisch abgedichtete Behälter eingegossen wird, zu welchen die aromatischen Verbindungen, welche sich vom Hopfen (3) und Zitrusaromen (4) ableiten, nachträglich hinzugefügt werden.

6. Verfahren nach einem der vorhergehenden Ansprüche, wobei die aromatische Verbindung (7), welche mit Wodka (1) gemischt werden soll, die Hopfenblume (3) ist, und wobei die aromatische Verbindung (8), welche mit Tequila (2) gemischt werden soll, aus Pampelmuse, Zitrone und/oder Limette ausgewählt wird.

7. Verfahren nach einem der vorhergehenden Ansprüche, welches das Extrahieren von Lupulin aus der Hopfenblume (3) umfasst, wobei es mit Wodka (1), welcher als Lösungsmittel verwendet wird, gemischt wird (7), wobei 3 kg Hopfenblume (3) für 300 Liter auf 40% gereinigter Wodka (1) verwendet werden.

8. Verfahren nach einem der Ansprüche 5 bis 7, wobei nach dem Mischen (7) von Wodka (1) mit dem Hopfen (3) bei einer Temperatur von -5°C, die resultierende Mischung eine Zeitdauer von fünfzehn Tagen bei Raumtemperatur einmaischen gelassen wird.

9. Verfahren nach einem der Ansprüche 5 bis 8, wobei das Mischen (8) von Tequila (2) mit Zitrusgewächsen (4) das Mischen, in 500 Liter gereinigter Tequila (2), 5 kg rote Pampelmusenschale, 10 kg Zitronenschale und 5 kg Limettenschale umfasst, und wobei die genannte Mischung (8) bei Raumtemperatur eine Zeitdauer von fünfzehn Tagen einmaischen gelassen wird.

10. Verfahren nach einem der vorhergehenden Ansprüche, wobei die Mischungen aus Alkohol (1, 2) und aromatischen Bestandteilen (3, 4) mit einem Arbeitsdestillierungsdruck von 0,7 bar und unter Erhalt der Temperatur der Alkoholdämpfe, welche eine Kondensation unterzogen werden, bei gleich oder weniger als 105°C, destilliert werden (9, 10).

11. Verfahren nach einem der vorhergehenden Ansprüche, wobei der Schritt des Destillierens (9) des Wodkas (1) einen Schritt des Kühlens mit Wasser bei einer Temperatur gleich oder kleiner als 10°C umfasst.

12. Verfahren nach einem der vorhergehenden Ansprüche, wobei die Destillation (10) der Mischung aus Zitrusgewächsen (4) und der alkoholische Phase aus Tequila (2) das Extrahieren der Köpfe, des Mittellaufs und der Sümpfe der genannte Destillation (10) umfasst.

13. Verfahren nach dem vorhergehenden Anspruch, wobei die Temperatur des destillierten Dämpfe gleich oder kleiner als 105°C ist.

14. Verfahren nach einem der vorhergehenden Ansprüche, wobei vollentsalztes Wasser, welches kontinuierlich bei 5°C gekühlt wird, den Destillationsprodukten (9, 10) hinzugefügt wird, sobald sie gemischt wurden (11), und wobei die Temperatur der Mischung derart kontrolliert wird, dass sie nicht 3°C überschreitet.

15. Alkoholisches Getränk auf der Basis von Tequila und Wodka, **dadurch gekennzeichnet, dass** es aus dem Verfahren nach einem der vorhergehenden Ansprüche erhalten wird.

## Revendications

1. Procédé de production de boisson alcoolisée à base de téquila et de vodka, **caractérisé en ce qu'**il comprend les étapes suivantes :
- la purification (5, 6) des composés alcooliques primaires de la vodka (1) et de la téquila (2) par élimination des sous-composés desdits composés qui ne sont pas désirés dans le produit final ;
- le mélange (7, 8) des composés alcooliques de la vodka (1) et de la téquila (2) purifiés selon l'étape précédente avec leurs composants aromatiques correspondants de houblon (3) et d'agrumes (4), et la macération des mélanges obtenus à température ambiante ;
- la distillation (9, 10) des mélanges macérés de vodka (1) et de téquila (2) obtenus dans l'étape précédente ;
- le mélange (11) des distillats de vodka (1) et de téquila (2) l'un avec l'autre, obtenant ainsi le produit de boisson final.

2. Procédé selon la revendication précédente, dans lequel, pour purifier (6) le composé de téquila (2), ladite téquila (2) est soumise à un traitement de refroidissement continu jusqu'à atteindre une température de produit contrôlée égale ou inférieure à -5°C.

3. Procédé selon la revendication précédente, dans lequel, après avoir effectué le traitement de refroidissement continu, la téquila (2) est soumise à une étape de filtration au moyen de plaques de cellulose.

4. Procédé selon l'une quelconque des revendications précédentes, dans lequel, pour purifier (5) de la vodka (1), le procédé commence par un alcool à haute concentration qui est soumis à une ou plusieurs étapes de dilution avec de l'eau déminéralisée jusqu'à atteindre une concentration de 40% en volume, et dans lequel le produit obtenu est filtré au moyen de charbon actif et/ou au moyen de plaques en cellulose.

5. Procédé selon l'une quelconque des revendications précédentes, dans lequel le mélange (7, 8) de chacune des phases aromatiques du houblon (3) et des agrumes (4) avec leurs phases alcooliques préalablement purifiées respectives (1, 2) comprend le maintien desdites phases (1, 2) à une température contrôlée ayant une valeur égale ou inférieure à 0°C, et dans lequel chacune desdites phases est versée dans des récipients hermétiquement fermés auxquels sont ajoutés ensuite les composés aromatiques dérivés du houblon (3) et des arômes d'agrumes (4).

6. Procédé selon l'une quelconque des revendications précédentes, dans lequel le composé aromatique à mélanger (7) avec de la vodka (1) est la fleur de houblon (3), et dans lequel le composé aromatique à mélanger (8) avec de la téquila (2) est choisi parmi le pamplemousse, le citron et/ou la lime.

7. Procédé selon l'une quelconque des revendications précédentes, qui comprend l'extraction de la lupuline à partir de la fleur de houblon (3), où elle est mélangée (7) avec de la vodka (1) utilisée comme solvant, où 3 kg de fleur de houblon (3) sont utilisés pour 300 litres de vodka (1) purifié jusqu'à 40%.

8. Procédé selon l'une quelconque des revendications 5 à 7, dans lequel, après avoir mélangé (7) de la vodka (1) avec le houblon (3) à une température de -5°C, on laisse macérer le mélange résultant pendant une période de quinze jours à température ambiante.

9. Procédé selon l'une quelconque des revendications 5 à 8, dans lequel le mélange (8) de téquila (2) avec des agrumes (4) comprend le mélange, dans 500 litres de téquila purifiée (2), de 5 kg de peau de pamplemousse rouge, de 10 kg de peau de citron et de 5 kg de peau de lime, et dans lequel ledit mélange (8) est laissé macérer à température ambiante pendant une durée de 15 jours.

10. Procédé selon l'une quelconque des revendications précédentes, dans lequel les mélanges d'alcool (1, 2) et de composants aromatiques (3, 4) sont distillés (9, 10) avec une pression de distillation de travail de 0,7 bar et en maintenant la température des vapeurs d'alcool qui vont subir une condensation égale ou inférieure à 105°C.

11. Procédé selon l'une quelconque des revendications précédentes, dans lequel l'étape de distillation (9) de la vodka (1) comprend une étape de refroidissement avec de l'eau à une température égale ou inférieure à 10°C.

12. Procédé selon l'une quelconque des revendications précédentes, dans lequel la distillation (10) du mélange d'agrumes (4) et de la phase alcoolique de la téquila (2) comprend l'extraction des têtes, du coeur et de la queue de ladite distillation (10).

13. Procédé selon la revendication précédente, dans lequel la température des vapeurs distillées est égale ou inférieure à 105°C.

14. Procédé selon l'une quelconque des revendications précédentes, dans lequel de l'eau déminéralisée refroidie en continu à 5°C est ajoutée aux produits de distillation (9, 10) une fois qu'ils ont été mélangés (11), et dans lequel la température du mélange est contrôlée de manière à ne pas dépasser 3°C.

15. Boisson alcoolisée à base de téquila et de vodka, **caractérisée en ce qu'**elle est obtenue à partir d'un procédé selon l'une quelconque des revendications précédentes.
